# EUROPEAN PATENT APPLICATION

(11) **EP 2 100 767 A1**
(43) Date of publication of application: **16.09.2009**
(21) Application number: 09155126.7
(22) Date of filing: 13.03.2009
(51) Int. Cl.: B60Q 1/068, B60Q 1/072

(54) **Vehicle headlamp**

(30) Priority: 13.03.2008 JP 2008064035
(71) Applicant: KOITO MANUFACTURING CO., LTD, Tokyo (JP)
(72) Inventor: Kusagaya, Masahiro, Shizuoka-shi, Shizuoka (JP); Fukuchi, Hideki, Shizuoka-shi, Shizuoka (JP)
(74) Representative: Intes, Didier Gérard André

(57) **Abstract**

A vehicle headlamp (1) is provided with a driving shaft (18) a front end of which is linked to a reflector (5) and movable in a forward and rearward direction to rotate the reflector (5); a wire (35) onto which a force in a pulling direction or a force in a loosing direction is exerted to move the driving shaft (18) in the forward or rearward direction; a biasing spring (23) for biasing the driving shaft (18) in a rearward direction; an adjustment screw (28) for moving the driving shaft (18) in the forward and rearward direction in accordance with the direction of revolution thereof; and an inverting transmission section (27) for transmitting the operation of the wire in the pulling direction and the loosing direction to the driving shaft in a manner inverted in the forward and rearward direction. A rotational fulcrum (10a) of the reflector (5) in the up and down direction with respect to the lamp housing (2) is provided above a point of linkage between the reflector (5) and the driving shaft (18).

## Description

### BACKGROUND OF THE INVENTION

### <FIELD OF THE INVENTION>

The present invention relates to a vehicle headlamp. Specifically, in a vehicle head lamp having a projection direction changing mechanism that allows projection direction to be changed in an up and down direction during the running, the present invention relates to a technical field for simplifying the mechanism in a state that a safety of the vehicle headlamp and a stably supported state of a reflector are ensured.

### <BACKGROUND ART>

Certain vehicle headlamps have a projection direction changing mechanism that adjusts an inclination angle (rotation angle) of a reflector supported inside a lamp housing in a rotatable manner so as to change the projection direction (see, for example, Patent Document 1). Adjustment of the projection direction in such a projection direction changing mechanism includes: so-called leveling adjustment in which, for example, when the projection direction has varied in the up and down direction in association with a change in a movable load, the projection direction is changed such that a problem in the running should be avoided; and so-called aiming adjustment serving as the initial adjustment of the projection direction performed after installation of a vehicle headlamp into a vehicle body
[Patent Document 1] JP-A-11-176206.

In the projection direction changing mechanism described in Patent Document 1, an adjusting shaft (adjusting screw) is revolved with the driving force of a drive motor so that leveling adjustment is achieved. In contrast, aiming adjustment is performed by manually revolving the adjusting shaft.

As such, in the vehicle headlamp described in Patent Document 1, changing of the projection direction (leveling adjustment) is performed by electronic control. That is, the drive motor serves as a driving source so as to change the projection direction. Then, the drive motor is driven and controlled by remote operation.

Nevertheless, such a projection direction changing mechanism employing electronic control causes a problem that a drive motor and electronic components are expensive and hence cause an increase in the manufacturing cost of the vehicle headlamp.

Thus, a method not employing electronic control can be implemented as follows. That is, for example, provided are:
a wire; a driving shaft for linking the wire to a reflector; and a biasing spring for resisting a tensile force of the wire. Further, any one of an upper part or a lower part of the reflector is adopted as a rotational fulcrum, while the other one is adopted as the point of application of the tensile force of the wire. Then, when the wire is pulled, the reflector is rotated in one direction. In contrast, when the wire is loosen, the reflector is rotated in the other direction by virtue of the biasing force of the biasing spring.

In such a projection direction changing mechanism employing a wire, in a case that the rotational fulcrum is provided in the upper part of the reflector and that the point of linkage to the wire is provided in the lower part of the reflector, when the wire is pulled, the reflector is rotated downward so that the projection direction is changed downward. In contrast, when the wire can loosen, the reflector is rotated upward so that the projection direction is changed upward.

Nevertheless, in the above-mentioned projection direction changing mechanism in which the point of linkage to the wire is provided in the lower part of the reflector, when an accident of wire breakage occurs, the biasing force of the biasing spring rotates the reflector upward to the rotation limit and hence the projection direction becomes upward relative to the horizontal direction. This can cause phenomena that degrade the traffic safety like the occurrence of glare to oncoming vehicles and the like and a veiling phenomenon with respect to the own vehicle.

Thus, the rotational fulcrum may be provided in the lower part of the reflector, while the point of linkage to the wire may be provided in the upward part of the reflector. Then, when the wire is pulled, the reflector is rotated upward. In contrast, when the wire is loosen, the reflector is rotated downward. Thus, when an accident of wire breakage occurs, the reflector is rotated downward to the rotation limit. This avoids the occurrence of glare or a veiling phenomenon.

Nevertheless, in a case that the rotational fulcrum is provided in the lower part of the reflector and that the point of linkage to the wire is provided in the upper part of the reflector, the mechanism unit that include the driving shaft for linking the wire with the reflector and the biasing spring for biasing the wire is located above the rotational fulcrum. That is, the mechanism unit of heavy weight is located above the rotational fulcrum. This can cause instability in the state of supporting the reflector so that the reflector cannot firmly be fixed to the lamp housing.

On the other hand, as described above, changing of the projection direction is performed also for the purpose of aiming adjustment in addition to the leveling adjustment. Then, if a projection direction changing mechanism for leveling adjustment and a projection direction changing mechanism for performing aiming adjustment were provided at separate positions, this would cause complexity in the mechanism.

### SUMMARY OF THE INVENTION

One or more embodiments of the present invention provide a vehicle headlamp in which a mechanism is simplified, while a safety of the vehicle headlamp and a stably supported state of a reflector are ensured.

In accordance with one or more embodiments of the invention, a vehicle headlamp (1) isprovidedwith: a reflector (5) rotatably supported in an inside of a lamp housing(2); and a projection direction changing mechanism (14, 14A) for rotating the reflector (5) so as to change a projection direction of light emitted from a light source (6). The projection direction changing mechanism (14, 14A) is provided with: a driving shaft (18, 18A) having a front end connected to the reflector (5) and movable in a forward and rearward direction to rotate the reflector (5) in an up and down direction; a wire (35) onto which a force in a forward direction serving as a pulling direction or a force in a rearward direction serving as a loosing direction is exerted to move the driving shaft (18, 18A) in the forward and rearward direction in accordance with a direction of an exerted force; a biasing spring (23) for biasing the driving shaft (18, 18A) in a rearward direction; an adjustment screw (28) to be axially revolved so as to move the driving shaft (18, 18A) in the forward and rearward direction in accordance with the direction of revolution; and an inverting transmission section (27, 38) for inverting an operation of the wire (35) in the pulling direction and the loosing direction in the forward and rearward direction and transmitting to the driving shaft (18, 18A). A rotational fulcrum (10a) of the reflector (5) in the up and down direction with respect to the lamp housing (2) is located above a point of linkage between the reflector (5) and the driving shaft (18, 18A),
wherein the driving shaft (18, 18A) moves forward against a biasing force of the biasing spring (23) when a force in the pulling direction is exerted on the wire (35), and
wherein the driving shaft (18, 18A) is moved rearward in accordance with the biasing force of the biasing spring (23) when a force in the loosing direction is exerted on the wire (35).

In the vehicle headlamp of the above embodiments, changing of the projection direction to be performed by operation of the wire and changing of the projection direction to be performed by revolution of the adjustment screw are achieved by the movement of the driving shaft in the forward and rearward direction.

Thus, the mechanism provided in the vehicle headlamp is simplified in a state that the safety and a stably supported state of the reflector are ensured.

In the vehicle headlamp, a holder (24) for supporting the inverting transmission section (27, 38) and movable in the forward and rearward direction may be provided. The adjustment screw (28) may be screwed into the holder (24) so as to be axially revolvable. The holder (24) and the inverting transmission section (27, 38) may move in the forward and rearward direction and the driving shaft (18, 18A) may move in the forward and rearward direction, when the adjustment screw (28) is revolved. Thus, the revolving force of the adjustment screw is reliably transmitted to the driving shaft, and hence operation reliability is improved in aiming adjustment.

The vehicle headlamp of the above embodiments may include a rack part (22a) provided on the driving shaft (18); a moving block (32) to which a front end of the wire (35) is connected and which is movable in the forward and rearward direction; a rack part (33a) provided on the moving block (32); and an inversion gear wheel (27) engaging with the rack part (22a) of the driving shaft (18) and the rack part (33a) of the moving block (32). The inversion gear wheel (27) may serve as the inverting transmission section (27). Thus, the amount of movement of the driving shaft in the forward and rearward direction is determined in proportion to the angle of rotation of the operation knob of the control switch serving as an operation device for leveling adjustment. This simplifies the leveling adjustment.

The vehicle headlamp may include: a moving block (32A) to which a front end of the wire (35) is connected and which is movable in the forward and rearward direction; and an inversion link (38) having two ends (38a, 38b) rotatably connected respectively to the driving shaft (18A) and the moving block (32A) and having a fulcrum at a middle part thereof. The inversion link (38) may serve as the inverting transmission section (38). This avoids the problem of backlash that could occur in a case that a gear wheel is employed as an inverting transmission section. Thus, the force exerted on the wire can be transmitted to the driving shaft with suffering merely a small loss.

Other aspects and advantages of the invention will be apparent from the following description, the drawings and the claims.

### BRIEF DESCRIPTION OF THE DRAWINGS

FIG. 1 is a sectional view of a vehicle headlamp, showing an exemplary embodiment of the present invention together with FIGS. 2 to 6.
FIG. 2 is a rear view of the vehicle headlamp.
FIG. 3 is an exploded perspective view of a projection direction changing mechanism.
FIG. 4 is an expanded sectional view showing a projection direction changing mechanism in a state that a driving shaft is moved forward.
FIG. 5 is an expanded sectional view showing a projection direction changing mechanism in a state that a driving shaft is moved rearward.
FIG. 6 is an expanded sectional view showing a projection direction changing mechanism that employs an inversion link as an inverting transmission section.

### DETAILED DESCRIPTION OF THE EXEMPLARY EMBODIMENTS

Exemplary embodiments of the invention are described referring to drawings.

Vehicle headlamps 1 and 1 are respectively attached on left and right ends in a front part of a vehicle body.

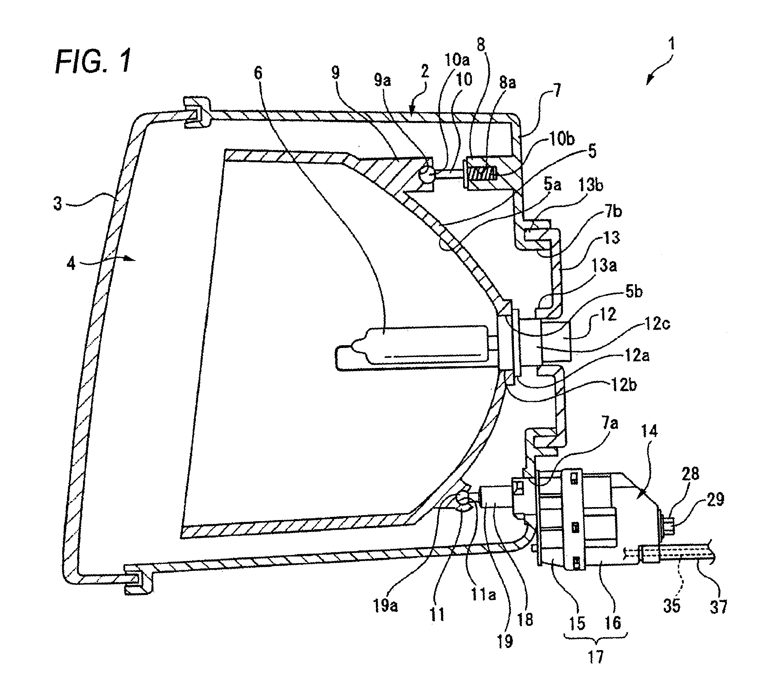

As shown in FIG. 1, in each vehicle headlamp 1, a reflector 5, a light source 6 attached to the reflector 5, and the like are arranged inside a lamp space 4 formed by a lamp housing 2 formed in the shape of a container having an opening in the front part and by a cover 3 that covers the opening of the lamp housing 2.

An insertion hole 7a is formed at the bottom end of the rear face part 7 of the lamp housing 2. Supporting projections 8 and 8 protruding forward are provided in the front face of the rear face part 7 of the lamp housing 2. Then, attachment recesses 8a and 8a each having an opening directed forward and a screw groove in the inner peripheral surface are formed in the supporting projections 8 and 8. The supporting projections 8 and 8 are provided respectively at a position immediately above the insertion hole 7a and at a side position (on the right or left side) of the insertion hole 7a.

A cover mounting hole 7b is formed in the rear face part 7 of the lamp housing 2.

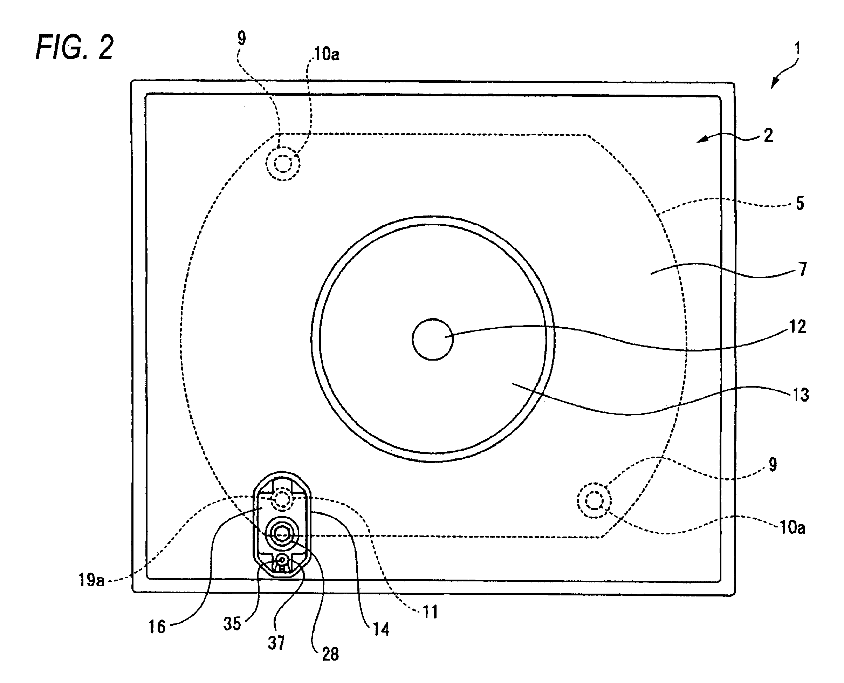

The inner surface of the reflector 5 is fabricated in the form of a reflecting surface 5a. To-be-supported projections 9 and 9 protruding rearward are provided respectively at the top and bottom ends of the reflector 5 (see FIGS. 1 and 2). Spherical recesses 9a and 9a each having an opening in the rearward direction are formed in the tip parts of the to-be-supported projections 9 and 9. The to-be-supported projections 9 and 9 are located in front of the supporting projections 8 and 8 of the reflector 5.

The reflector 5 is linked to the lamp housing 2 by linkage members 10 and 10 (see FIG. 1). In each linkage member 10, the front end has a spherical part 10a, while the rear end has an attachment part 10b provided with a screw groove. In the linkage members 10 and 10, the spherical parts 10a and 10a are linked respectively to the spherical recesses 9a and 9a of the reflector 5 in a revolvable manner, while the attachment parts 10b and 10b are screwed respectively into the attachment recesses 8a and 8a of the lamp housing 2. Thus, the reflector 5 is supported by the lamp housing 2 in a manner capable of being rotated (tilted) about the spherical parts 10a and 10a each serving as a fulcrum.

A bearing protrusion 11 is provided at the bottom end of the reflector 5. The bearing protrusion 11 protrudes rearward from the reflector 5, and has a ball bearing recess 11a provided with an opening in the rearward direction. As shown in FIG. 2, the bearing protrusion 11 is located immediately under the to-be-supported projection 9 at the top end and located immediately on a side of the to-be-supported projection 9 at the bottom end.

As shown in FIG. 1, an electric bulb mounting hole 5b is formed at the rear end of the reflector 5. Then, the light source 6 is attached into the electric bulb mounting hole 5b. The light source 6 has a cap part 12. The cap part 12 has:
a flange part 12a; a to-be-attached part 12b located on the front side of the flange part 12a; and a cover attachment part 12c located on the rear side of the flange part 12a. The to-be-attached part 12b of the light source 6 is attached to the electric bulb mounting hole 5b of the reflector 5.

A back cover 13 for covering the cover mounting hole 7b is attached to the rear face part 7 of the lamp housing 2. The back cover 13 is formed approximately in a ring shape. Then, its inner periphery part 13a is attached to the cover attachment part 12c of the light source 6, while its outer periphery part 13b is attached to the opening edge of the cover mounting hole 7b of the lamp housing 2.

At the bottom end of the lamp housing 2, a projection direction changing mechanism 14 is attached from the rearward. A part of the projection direction changing mechanism 14 is inserted into the insertion hole 7a of the rear face part 7.

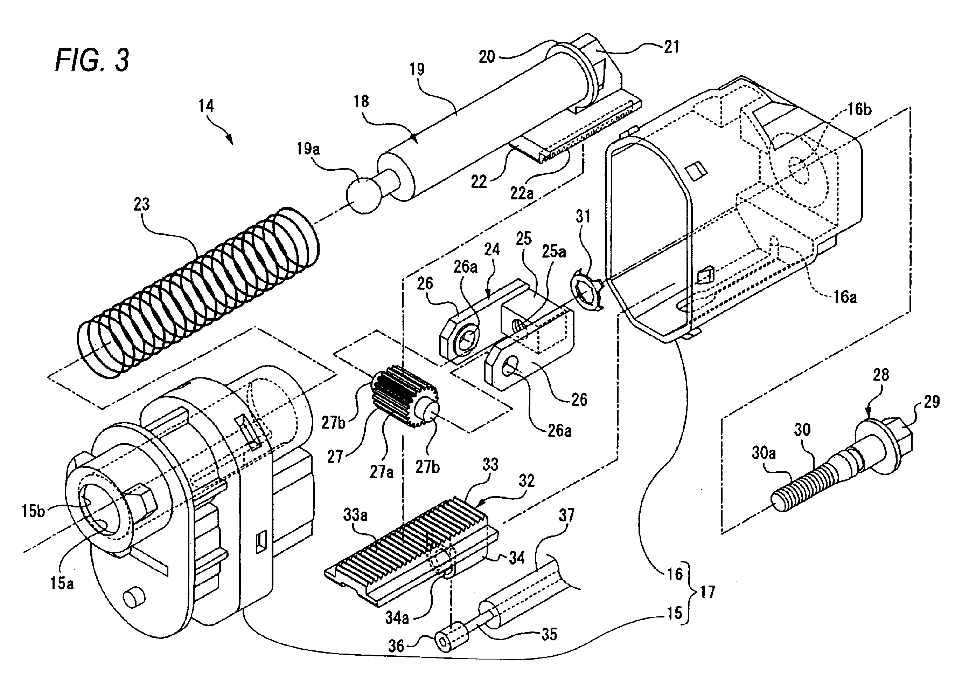

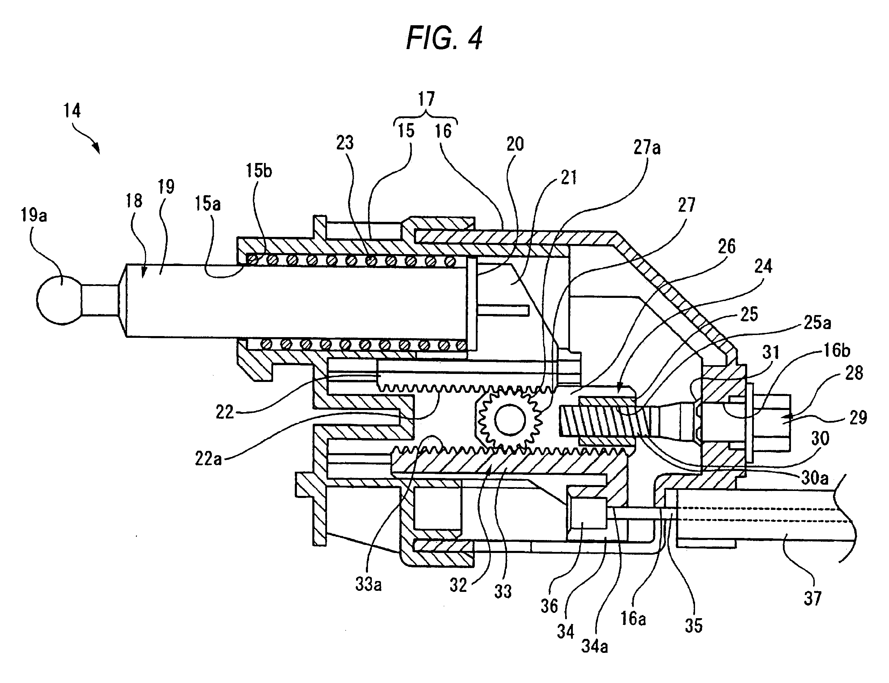

A major part of the projection direction changing mechanism 14 is arranged in the inside of the case body 17 constructed from a front case 15 and a rear case 16 (see FIGS. 3 and 4).

The front case 15 has an opening in the rearward direction, and has a shaft insertion hole 15a that is located at the top end and penetrates in the forward and rearward direction. At the opening edge of the shaft insertion hole 15a of the front case 15, a spring receiving part 15b is provided that has the shape of a flange protruding inward.

The rear case 16 has an opening in the frontward direction, and has a wire insertion hole 16a that is located at the bottom end and that penetrates in the forward and rearward direction. In the center part of the rear case 16 with respect to the up and down direction, a support hole 16b is formed that penetrates in the forward and rearward direction.

In the case body 17, a driving shaft 18 is supported in a manner movable in the forward and rearward direction. The driving shaft 18 has: a shaft part 19 elongated in the forward and rearward direction; a spring receiving face part 20 having the shape of a flange provided in the rear face of the shaft part 19; a linkage part 21 provided on the rear face side of the spring receiving face part 20; and a rack formation part 22 provided in the lower surface of the linkage part 21.

The rack formation part 22 is formed approximately in a plate shape facing the up and down direction, and is separated under the shaft part 19. In the lower surface of the rack formation part 22, a rack part 22a is formed that continues in the forward and rearward direction.

The driving shaft 18 is supported by the case body 17 in a manner movable in the forward and rearward direction in a state that the shaft part 19 is inserted into the shaft insertion hole 15a. A part of the shaft part 19 including the spherical part 19a protrudes forward from the case body 17.

In the state that the driving shaft 18 is supported by the case body 17, a biasing spring 23 is supported between the spring receiving part 15b of the front case 15 and the spring receiving face part 20 of the driving shaft 18. The biasing spring 23 is composed of a compression spring or the like, and has the function of biasing the driving shaft 18 rearward.

In the inside of the case body 17, at a position under the driving shaft 18, a holder 24 is supported in a manner movable in the forward and rearward direction. The holder 24 has: a base part 25 formed approximately in a block shape; and arm parts 26 and 26 protruding forward respectively from the left and right ends of the base part 25.

An adjustment screw hole 25a that penetrates in the forward and rearward direction is formed in the base part 25.

In the front end of the arm parts 26 and 26, gear support holes 26a and 26a are formed respectively.

In the gear support holes 26a and 26a of the arm parts 26 and 26, an inversion gear wheel 27 serving as an inverting transmission section is supported in a revolvable manner. The inversion gear wheel 27 has: a gear part 27a extending in the right and left directions; and to-be-supported shaft parts 27b and 27b protruding outward respectively from the two side-faces of the gear part 27a. The to-be-supported shaft parts 27b and 27b are inserted respectively into the gear support holes 26a and 26a of the arm parts 26 and 26 so as to be supported by the holder 24 in a revolvable manner. The gear part 27a of the inversion gear wheel 27 engages with the rack part 22a formed in the rack formation part 22 of the driving shaft 18.

An adjustment screw 28 is screwed into the adjustment screw hole 25a of the holder 24. The adjustment screw 28 has:
a head 29 located in a rear part; and a shaft part 30 protruding forward from the front face of the head 29.

The head 29 is formed, for example, in the shape of a hexagonal column, and then revolved by using a fixture (not shown) as such a screw driver.

Almost the entirety of the forward part of the shaft part 30 is fabricated in the form of a threaded shaft part 30a.

The shaft part 30 of the adjustment screw 28 is inserted from the rearward into the support hole 16b formed in the rear case 16 of the case body 17, and then is supported so as to be axially revolvable in a state that movement in the forward and rearward direction is restricted by a nut 31. The threaded shaft part 30a of the adjustment screw 28 is screwed into the adjustment screw hole 25a of the holder 24. Thus, when the head 29 is revolved so that the adjustment screw 28 axially revolves, the threaded shaft part 30a is screwed forward into or backward from the adjustment screw hole 25a in accordance with the direction of revolution. Then, in accordance with the direction of revolution of the adjustment screw 28, the holder 24 and the inversion gear wheel 27 are integrally moved in the forward and rearward direction.

In the inside of the case body 17, at a position under the holder 24, a moving block 32 is supported in a manner movable in the forward and rearward direction. The moving block 32 has: a rack base part 33 formed approximately in a plate shape and facing the up and down direction; and a wire linkage part 34 protruding downward from the rear end of the rack base part 33.

In the upper face of the rack base part 33, a rack part 33a is formed that continues in the forward and rearward direction.

In the wire linkage part 34, a linkage notch 34a is formed that has an opening in the downward direction and that penetrates in the forward and rearward direction.

The rack part 33a formed in the rack base part 33 of the moving block 32 engages with the gear part 27a of the inversion gear wheel 27. Thus, the inversion gear wheel 27 engages with the rack part 33a of the moving block 32 and the rack part 22a of the driving shaft 18. Then, when the moving block 33 is moved forward the driving shaft 18 is moved rearward by virtue of rotation of the inversion gear wheel 27. In contrast, when the moving block 33 is moved rearward, the driving shaft 18 is moved forward with resisting the biasing force of the biasing spring 23 by virtue of rotation of the inversion gear wheel 27.

The wire 35 is linked into the linkage notch 34a of the moving block 32. A stopper 36 is attached to a forward end of the wire 35. The entirety of the wire 35 except for the forward end part is covered by an outer tube 37. In the wire 35, the forward end part is inserted into the linkage notch 34a from the downward direction, and then the stopper 36 is locked to the front face of the wire linkage part 34 so that the wire 35 is linked to the moving block 32.

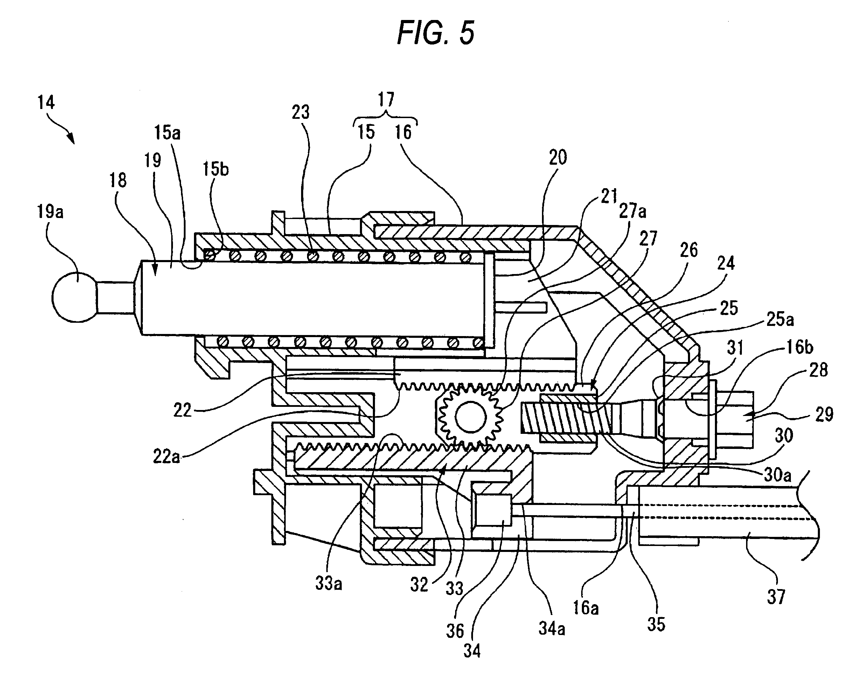

The wire 35 is linked, for example, to a control switch (not shown) arranged in a car cabin such as at the driver's seat in a state that a rearward tensile force is exerted. Thus, when the operation knob of the control switch is revolved in one direction, the wire 35 is pulled so that the moving block 32 is moved rearward. As a result, the driving shaft 18 is moved forward in association with the rotation of the inversion gear wheel 27 (see FIG. 4). In contrast, when the operation knob of the control switch is revolved in the other direction, the wire 35 is loosened so that the moving block 32 is moved forward. As a result, the driving shaft 18 is moved rearward in association with the rotation of the inversion gear wheel 27 (see FIG. 5).

As shown in FIG. 1, in the projection direction changing mechanism 14, a part of the case body 17 is inserted from the rearward into the insertion hole 7a formed in the rear face part 7 of the lamp housing 2. Further, the spherical part 19a of the driving shaft 18 is linked, in a revolvable manner, to the ball bearing recess 11a of the bearing protrusion 11 provided at the bottom end of the reflector 5.

In the projection direction changing mechanism 14 having the above-mentioned configuration, leveling adjustment is achieved as follows by revolving the operation knob of the control switch in a desired direction.

As described above, when the operation knob of the control switch is revolved in one direction so that the driving shaft 18 is moved forward, the reflector 5 is rotated (tilted) in a direction that the bottom end is moved forward, so that the projection direction is changed upward. In contrast, when the operation knob of the control switch is revolved in the other direction so that the driving shaft 18 is moved rearward, the reflector 5 is rotated (tilted) in a direction that the bottom end is moved rearward, so that the projection direction is changed downward.

On the other hand, in the projection direction changing mechanism 14, aiming adjustment is achieved as follows by revolving the adjustment screw 28 in a desired direction by using a fixture such as a screw driver.

When rotation operation is performed on the head 29 so that the adjustment screw 28 is revolved in one of axially rotational directions, the holder 24, the inversion gear wheel 27, the driving shaft 18, and the moving block 32 are integrally moved rearward. When the driving shaft 18 is moved rearward, the reflector 5 is rotated in a direction that the bottom end is moved rearward, so that the projection direction is changed downward.

In contrast, when rotation operation is performed on the head 29 so that the adjustment screw 28 is revolved in the other one of the axially rotational directions, the holder 24, the inversion gear wheel 27, the driving shaft 18, and the moving block 32 are integrally moved forward. When the driving shaft 18 is moved forward, the reflector 5 is rotated in a direction that the bottom end is moved forward, so that the projection direction is changed upward.

In the projection direction changing mechanism 14, in an accidental case that the wire 35 breaks, the driving shaft 18 is moved rearward by the biasing force of the biasing spring 23 so that the projection direction is changed downward. Thus, even in an accidental case of breakage of the wire 35, glare to oncoming vehicles and a veiling phenomenon with respect to the own vehicle do not occur, and hence a situation is avoided that illuminating light from the vehicle headlamp 1 degrades the traffic safety.

Here, the above-mentioned description has been given for an example that the reflector 5 is linked to the lamp housing 2 by the linkage members 10 and 10. However, for example, in replace of the linkage members 10 and 10, the reflector 5 may be linked to the lamp housing 2 by aiming screws so that aiming adj ustment may be performed. The aiming screws penetrate the lamp housing 2 from the rearward, and then are screwed into the reflector 5.

In this case, when the upper aiming screw is revolved, the reflector 5 is rotated in a direction that the top end is moved in the forward and rearward direction in accordance with the direction of revolution of the aiming screw, so that the projection direction is changed upward or downward.

On the other hand, when the lower aiming screw is revolved, the reflector 5 is rotated in a direction that the right-hand end or the left-hand end is moved in the forward and rearward direction in accordance with the direction of revolution of the aiming screw, so that the projection direction is changed leftward or rightward.

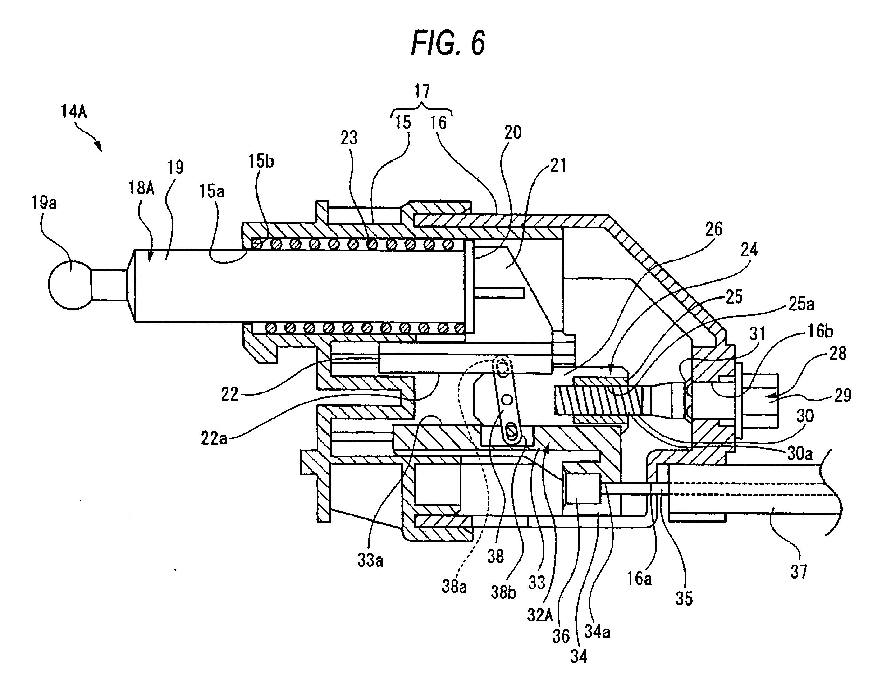

The above-mentioned description has been given for an example that the inversion gear wheel 27 is employed as an inverting transmission section for inverting the direction of the force exerted on the wire 35 into the moving direction of the driving shaft 18. However, the inverting transmission section is not restricted to the inversion gear wheel 27. That is, for example, an inversion link 38 described below may be employed as an inverting transmission section (see FIG. 6).

In the inversion link 38, the center part in the longitudinal direction is supported by the holder 24 in a freely rotatable manner. In the inversion link 38, one end 38a is linked to the driving shaft 18A in a rotatable manner, while the other end 38b is linked to the moving block 32A in a rotatable manner. Here, a rack part is not provided in the driving shaft 18A and the moving block 32A.

In the projection direction changing mechanism 14A that employs the inversion link 38, when the wire 35 is pulled, the inversion link 38 is rotated in a direction that the other end 38b is moved rearward and that the one end 38a is moved forward, so that the driving shaft 18A is moved forward. Then, the reflector 5 is rotated in a direction that the bottom end is moved forward, so that the projection direction is changed upward.

In contrast, in the projection direction changing mechanism 14A, when the wire 35 is loosen, the inversion link 38 is rotated in a direction that the other end 38b is moved forward and that the one end 38a is moved rearward, so that the driving shaft 18A is moved rearward. Then, the reflector 5 is rotated in a direction that the bottom end is moved rearward, so that the projection direction is changed downward.

On the other hand, in the projection direction changing mechanism 14A, when the adjustment screw 28 is axially revolved, the holder 24, the inversion link 38, the driving shaft 18A, and the moving block 32A are integrally moved in the forward and rearward direction so that the reflector 5 is rotated. As a result, the projection direction is changed downward or upward.

As described above, in the vehicle headlamp 1, the spherical part 10a of the linkage member 10 serving as a rotational fulcrum of the reflector 5 in the up and down direction relative to the lamp housing 2 is provided above the point of linkage to the driving shaft 18 or 18A. Further, provided are: an inverting transmission section (the inversion gear wheel 26 or the inversion link 38) for inverting the operation of the wire 35 in the pulling direction and the loosing direction with respect to the forward and rearward direction; and an adjustment screw 28 for moves the driving shaft 18 or 18A in the forward and rearward direction. By virtue of this, the mechanism provided in the vehicle headlamp 1 is simplified in a state that the safety and a stably supported state of the reflector 5 are ensured.

Further, in the projection direction changing mechanisms 14 and 14A, both of the mechanism for performing leveling adjustment and the mechanism for performing aiming adjustment are provided. This improves the workability in the work of assembling the reflector 5 to the lamp housing 2, the work of assembling the projection direction changing mechanism 14 or 14A to the lamp housing 2, and the work of assembling the projection direction changing mechanism 14 or 14A to the reflector 5.

Further, in the vehicle headlamp 1, rotation of the reflector 5 is achieved by a force exerted on the wire 35 not employing electronic control. This reduces the manufacturing cost of the projection direction changing mechanisms 14 and 14A.

Further, in the vehicle headlamp 1, the holder 24 is provided that supports the inversion gear wheel 27 or the inversion link 38 serving as an inverting transmission section. Then, when the adjustment screw 28 is axially rotated, the holder 24 and the inverting transmission section is moved in the forward and rearward direction so that the driving shaft 18 or 18A is moved in the forward and rearward direction. Thus, the revolving force of the adjustment screw 28 is reliably transmitted to the driving shaft 18 or 18A. This improves operation reliability in aiming adjustment.

In addition, the inverting transmission section is implemented by the inversion gear wheel 27 that engages with the rack part 22a of the driving shaft 18 and the rack part 33a of the moving block 32. Thus, the amount of movement in the forward and rearward direction of the driving shaft 18 is determined in proportion to the angle of rotation of the operation knob of the control switch. This simplifies leveling adjustment.

On the other hand, when the inverting transmission section is implemented by the inversion link 38 that links the driving shaft 18A to the moving block 32A, the problem of backlash is avoided which is expected to occur when a gear wheel is employed. Thus, the force exerted on the wire 35 can be transmitted to the driving shaft 18A with suffering merely a small loss.

Here, the above-mentioned description has been given for an example that the reflector 5 is supported by the lamp housing 2. However, for example, the reflector 5 may be supported by the lamp housing 2 via intermediate members like brackets.

### [Description of Reference Numerals and Signs]

1... vehicle headlamp, 2... lamp housing, 5... reflector, 6... light source, 14... projection direction changing mechanism, 18... driving shaft, 22a... rack part, 23... biasing spring, 24... holder, 27... inversion gear wheel, 28... adjustment screw, 32... moving block, 33a... rack part, 35... wire, 38... inversion link, 14A... projection direction changing mechanism, 18A... driving shaft, 32A... moving block

## Claims

1. A vehicle headlamp (1) comprising:
a reflector (5) rotatably supported in an inside of a lamp housing(2); and
a projection direction changing mechanism (14, 14A) for rotating the reflector (5) so as to change a projection direction of light emitted from a light source (6),
wherein the projection direction changing mechanism (14, 14A) includes:
a driving shaft (18, 18A) having a front end connected to the reflector (5) and movable in a forward and rearward direction to rotate the reflector (5) in an up and down direction;
a wire (35) onto which a force in a forward direction serving as a pulling direction or a force in a rearward direction serving as a loosing direction is exerted to move the driving shaft (18, 18A) in the forward and rearward direction in accordance with a direction of an exerted force;
a biasing spring (23) for biasing the driving shaft (18, 18A) in a rearward direction;
an adjustment screw (28) capable of axially revolving so as to move the driving shaft (18, 18A) in the forward and rearward direction in accordance with the direction of revolution; and
an inverting transmission section (27, 38) for inverting an operation of the wire (35) in the pulling direction and the loosing direction in the forward and rearward direction and transmitting to the driving shaft (18, 18A),
wherein a rotational fulcrum (10a) of the reflector (5) in the up and down direction with respect to the lamp housing (2) is located above a point of linkage between the reflector (5) and the driving shaft (18, 18A),
wherein the driving shaft (18, 18A) moves forward against a biasing force of the biasing spring (23) when a force in the pulling direction is exerted on the wire (35), and
wherein the driving shaft (18, 18A) is moved rearward in accordance with the biasing force of the biasing spring (23) when a force in the loosing direction is exerted on the wire (35).

2. The vehicle headlamp (1) according to claim 1, further comprising:
a holder (24) for supporting the inverting transmission section (27, 38) and movable in the forward and rearward direction;
wherein the adjustment screw (28) is screwed into the holder (24) so as to be capable of axially revolving; and
wherein the holder (24) and the inverting transmission section (27, 38) move in the forward and rearward direction and the driving shaft (18, 18A) moves in the forward and rearward direction, when the adjustment screw (28) is revolved.

3. The vehicle headlamp (1) according to claim 1 or 2, further comprising:
a rack part (22a) provided on the driving shaft (18);
a moving block (32) to which a front end of the wire (35) is connected and which is movable in the forward and rearward direction;
a rack part (33a) provided on the moving block (32); and
an inversion gear wheel (27) engaging with the rack part (22a) of the driving shaft (18) and the rack part (33a) of the moving block (32), wherein the inversion gear wheel (27) serves as the inverting transmission section (27).

4. The vehicle headlamp (1) according to claim 1 or 2, further comprising:
a moving block (32A) to which a front end of the wire (35) is connected and which is movable in the forward and rearward direction; and
an inversion link (38) having two ends (38a, 38b) rotatably connected respectively to the driving shaft (18A) and the moving block (32A) and having a fulcrum at a middle part thereof,
wherein the inversion link (38) serves as the inverting transmission section (38).
